# EUROPÄISCHE PATENTSCHRIFT

(11) **EP 0 929 588 B1**
(45) Veröffentlichungstag und Bekanntmachung des Hinweises auf die Patenterteilung: **05.12.2001**
(21) Anmeldenummer: 97944886.7
(22) Anmeldetag: 17.09.1997
(51) Int. Cl.: C08G 18/80, C08G 18/70

(54) **WASSERDISPERGIERBARE ISOCYANATE MIT VERBESSERTEM AUFZIEHVERMÖGEN ALS PAPIERHILFSMITTEL**
WATER DISPERSABLE ISOCYANATES WITH ENHANCED ABSORBING CAPACITY AS PAPER AUXILIARY AGENTS
ISOCYANATES DISPERSIBLES DANS L'EAU A POUVOIR D'ABSORPTION AMELIORE UTILISES COMME AGENTS AUXILIAIRES POUR LE PAPIER

(30) Priorität: 30.09.1996 DE 19640205
(43) Veröffentlichungstag der Anmeldung: 21.07.1999
(73) Patentinhaber: BAYER AG, 51368 Leverkusen (DE)
(72) Erfinder: JANSEN, Bernhard, D-51061 Köln (DE); THIELE, Bernd, D-51519 Odenthal (DE); ROICK, Thomas, D-51375 Leverkusen (DE); KIJLSTRA, Johan, D-51375 Leverkusen (DE)
(86) Internationale Anmeldenummer: EP9705087
(87) Internationale Veröffentlichungsnummer: WO9814495

(56) Entgegenhaltungen:
- EP-A- 0 554 747
- DE-A- 4 419 572
- DE-A- 4 446 334

## Beschreibung

Die Erfindung betrifft wasserdispergierbare Polyisocyanate, ihre Herstellung und Verwendung.

Aus DE-A 4 211 480 ist ein Verfahren bekannt zur Naßfestausrüstung von Papier mit Hilfe wasserdispergierbarer Polyisocyanatgemische, welche 2 bis 20 Gew.-% in Form von Polyetherketten angeordneter Ethylenoxideinheiten aufweisen, wobei diese Ketten im statistischen Mittel 5 bis 70 Ethylenoxideinheiten aufweisen. EP-A 0 582 166 beschreibt die Anwendung von Polyisocyanaten, enthaltend tert. Aminogruppen und/oder Ammoniumgruppen und 0 bis 30 Gew.-% (bezogen auf das Gemisch) Ethylenoxideinheiten in Form von Polyetherketten, mit dem Ziel, trockenfest und naßfest ausgerüstete und/oder geleimte cellulosehaltige Materialien herzustellen. Im Beispiel 20 wird die Verwendung von methyliertem Dimethylaminopropanol beschrieben. DE-A 4 436 058 gibt Aufschluß über ein Verfahren zur Herstellung trockenfest und/oder naßfest ausgerüsteter cellulosehaltiger Materialien durch Verwendung von wasserdispergierbaren Polyisocyanaten mit erhöhtem Polyetheranteil.

DE-A 4 446 334 beschreibt ein Verfahren zur Herstellung besser wiederaufschließbaren Papieres durch Verwendung oder Mitverwendung von Ester- oder Amidstrukturen enthaltenden Isocyanaten.

Angesichts der gestiegenen Anforderungen sollten wirksame Papierhilfsmittel bei vereinfachter Herstellung bereitgestellt werden.

Die Erfindung betrifft wasserdispergierbare Polyisocyanate P, erhältlich durch Umsetzung folgender Ausgangskomponenten:
a) wenigstens eines Polyisocyanates a),
b) wenigstens eines, gegebenenfalls Estergruppen enthaltenden, Polyalkylenoxidpolyetheralkohols b) und
c) wenigstens eines quaternierten tertiären Aminopolyalkylenoxidpolyetheralkohols, vorzugsweise der Struktur (I) 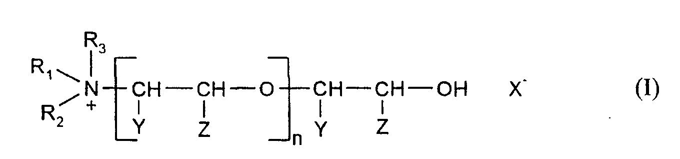 worin bedeuten:
   - n: ganze Zahl von 2 bis 60,
   - R₁, R₂: gleich oder verschieden, Alkylrest mit 2 bis 7 C-Atomen oder zusammen, gegebenenfalls unter Einbeziehung von R₃, den Rest eines heterocyclischen Ringes, insbesondere Morpholin,
   - R₃: Alkylrest mit 1 bis 7 C-Atomen,
   - X⁻: in der Isocyanatchemie übliches Anion, insbesondere SO₄²⁻/₂, 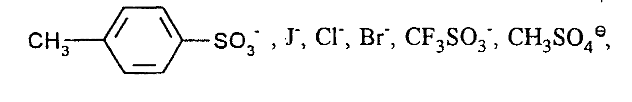
   - Y, Z: Wasserstoff oder Methyl mit der Maßgabe, daß stets mindestens einer von beiden Wasserstoff darstellt, wobei die wiederkehrenden Einheiten ⁅CHY―CHZ-O-⁆ jeweils gleich oder verschieden voneinander sein können,
d) gegebenenfalls weitere Hilfs- und Zusatzstoffe.

Der Begriff "wasserdispergierbar" im Zusammenhang mit den erfindungsgemäßen Polyisocyanaten P bedeutet, daß es sich um Polyisocyanate handelt, die in einer Konzentration von 70 Gew.-%, vorzugsweise bis zu 50 Gew.-% in Wasser feinteilige Dispersionen mit Partikelgrößen von kleiner als 500 nm ergeben.

In einer bevorzugten Ausführungsform handelt es sich bei dem Polyisocyanat a) um ein modifiziertes Polyisocyanat.

Der Begriff "modifizierte" im Zusammenhang mit den Polyisocyanaten bedeutet allgemein, daß es sich um an sich bekannte Folgeprodukte an sich bekannter Diisocyanate handelt, welche vorzugsweise wenigstens eines der nachstehend erwähnten Sturkturelemente aufweist.

Als modifizierte Polyisocyanate a) sind verwendbar: aliphatische, cycloaliphatische, araliphatische oder aromatische Isocyanate der NCO-Funktionalität von 1,8 bis 4,2. Bevorzugt werden verwendet Polyisocyanate, welche Uretdion- und / oder Isocyanurat- und/oder Allophanat- und/oder Biuret- und/oder Oxadiazinstrukturen aufweisen und die in bekannter Weise aus aliphatischen, cycolaliphatischen, araliphatischen oder aromatischen Diisocyanaten zugänglich sind.

Es handelt sich hier bevorzugt um im wesentlichen aus trimerem 1,6-Diisocyanatohexan oder 1-Isocyanato-3,3,5-trimethyl-5-isocyanatomethyl-cyclohexan und den entsprechenden höheren Homologen bestehenden, Isocyanuratgruppen und gegebenenfalls Uretdiongruppen aufweisenden Polyisocyanatgemischen mit einem NCO-Gehalt von 19 bis 24 Gew.-%. Besonders bevorzugt sind die entsprechenden, weitgehend Uretdiongruppenfreien, Isocyanatgruppen aufweisenden Polyisocyanate des genannten NCO-Gehaltes, die durch an sich bekannte, katalytische Trimerisierung unter Isocyanurat-Bildung von 1,6-Diisocyanatohexan oder 1-Isocyanato-3,3,5-trimethyl-5-isocyanatomethyl-cylcohexan erhalten werden und die vorzugsweise eine (mittlere) NCO-Funktionalität von 3,2 bis 4,2 aufweisen. Bevorzugt sind auch die durch Reaktion von 1,6-Diisocyanatohexan mit einem Unterschuß an Wasser in bekannter Weise erhaltenen, im wesentlichen Biuretgruppen aufweisenden trimeren Polyisocyanate mit einem NCO-Gehalt von 19 bis 25 Gew.-%.

Gleichfalls als modifizierte Polyisocyanat a) einsetzbar sind die in der DE-A 4 446 334 in den Ansprüchen 1,2,3,7 und 8 beschriebenen Polyisocyanate. Besonders bevorzugte derartige Polyisocyanate weisen die in der DE-A 4 446 334 angegebenen Formeln (II) und (III) auf.

Bevorzugte Polyisocyanate a) entsprechen folgender Formel (II) 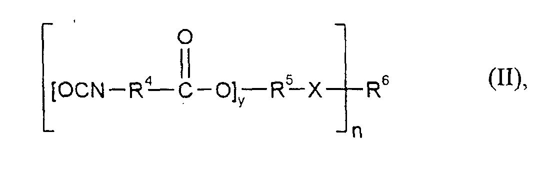 in der bedeuten:
- R⁴: einen aliphatischen Kohlenwasserstoffrest mit 2 bis 18 Kohlenstoffatomen; einen cycloaliphatischen Kohlenwasserstoffrest mit 4 bis 15 Kohlenstoffatomen; einen aromatischen Kohlenwasserstoffrest mit 6 bis 15 Kohlenstoffatomen oder einen araliphatischen Kohlenwasserstoffrest mit 8 bis 15 Kohl enstoffatomen,
- R⁵: einen gegebenenfalls Doppelbindungen aufweisenden aliphatischen Kohlenwasserstoffrest mit 10 bis 35 Kohlenstoffatomen,
- R⁶: einen mindestens zweiwertigen Kohlenwasserstoffrest, der auch gegebenenfalls unter Einbeziehung des Estersauerstoffes bzw. Amidstickstoffs aus X heterocyclisch sein kann,
- X: 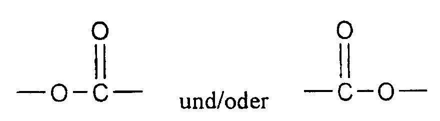 und/oder 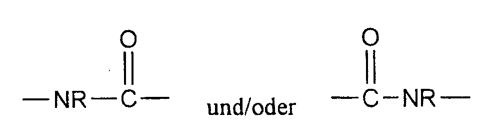
mit R = H oder C₁-C₄-Alkyl oder Bestandteil einer ringförmigen Struktur, n eine Zahl, wenigstens 2 und y eine Zahl, wenigstens 1,
entweder allein oder im Gemisch mit nicht Ester- und/oder Amidgruppen enthaltenden Isocyanaten verwendet werden.

Gegebenenfalls Estergruppen enthaltende Polyalkylenoxidpolyetheralkohole b) sind ein- oder mehrwertige, im statistischen Mittel 2 bis 70, vorzugsweise 2 bis 60 Ethylenoxideinheiten pro Molekül enthaltende Polyalkylenoxidpolyetheralkohole, wie sie in an sich bekannter Weise durch Alkoxylierung geeigneter Startermoleküle zugänglich sind.

Zur Herstellung dieser Polyalkylenoxidpolyetheralkohole können beliebige ein-oder mehrwertige Alkohole des Molekulargewichtsbereiches 32 bis 150 g/mol, wie sie beispielsweise auch gemäß EP-A 0 206 059 Verwendung finden, als Startermoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol oder Ethylenglykolmonomethylether. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich vorzugsweise um reine Polyethylenoxidpolyether oder um gemischte Polyalkylenoxidpolyether, die mindestens eine Polyethersequenz aufweisen, die mindestens 2, im allgemeinen 2 bis 70, vorzugsweise 2 bis 60 und besonders bevorzugt 2 bis 50 Ethylenoxideinheiten besitzt, und deren Alkylenoxideinheiten zu mindestens 60 Mol-%, vorzugsweise zu mindestens 70 Mol-%, aus Ethylenoxideinheiten bestehen. Bevorzugte derartige Polyalkylenoxidpolyetheralkohole sind monofunktionelle, auf einem aliphatischen, 1 bis 4 Kohlenstoffatome aufweisenden Alkohol gestarteten Polyalkylenoxidpolyether, die im statistischen Mittel 2 bis 60 Ethylenoxideinheiten enthalten. Besonders bevorzugte Polyalkylenoxidpolyetheralkohole sind reine Polyethylenglykolmonomethyletheralkohole, die im statistischen Mittel 2 bis 40 Ethylenoxideinheiten aufweisen.

Geeignete estergruppenhaltige Polyalkylenoxidpolyether sind OH-terminierte Polyesterether, die durch Umsetzung von aliphatischen C₂-C₈-Dicarbonsäuren oder deren Estern oder Säurechloride mit Polyethern aus der Gruppe der Polyethylenoxide, Polypropylenoxide oder deren Gemischen oder Mischpolyethern daraus, wobei pro OH-Äquivalent des Polyethers 0,8 bis 0,99 Äquivalente an Carboxyl-Gruppen oder deren Derivaten eingesetzt werden, erhältlich sind und ein mittleres Molgewicht unter 10.000 g/mol, vorzugsweise unter 3.000 g/mol aufweisen und Hydroxylendgruppen besitzen.

Quaternierte Aminopolyalkylenoxidpolyetheralkohole sind an sich aus EP-A-109 354 und EP-A- 335 115 bekannt.

Die quaternierten tertiären Aminopolyalkylenoxidpolyetheralkohole I werden vorzugsweise so hergestellt, daß mindestens eine tert. Aminogruppe aufweisende Alkohole des Molekulargewichtsbereiches von bis zu 150 g/mol als Startermolküle eingesetzt wird. Bevorzugt werden als Startermoleküle mindestens eine tert.

Aminogruppe aufweisende aliphatische Alkohole mit bis zu 10 Kohlenstoffatomen verwendet. Besonders bevorzugt als Startermolküle werden monofunktionelle aliphatische tert. Aminoalkohole mit bis zu 10 Kohlenstoffatomen. Die Quaternierung der tert. Aminofunktion kann sowohl vor der Alkoxylierung des Starters erfolgen als auch nach dessen Alkoxylierung.

Die Alkylierung erfolgt nach an sich bekannten Verfahren des Standes der Technik mit bekannten Alkylierungsmitteln. Beispielhaft seien hier genannt Dialkylsulfate, Alkylchoride, Alkyljodide, Alkylbromide, Toluolsulfonsäurealkylester sowie Trifluormethylsulfonsäurealkylester. Bevorzugt sind Alkylierungsmittel mit einem Alkylrest von einem bis sieben Kohlenstoffatomen. Besonders bevorzugt sind Methylverbindungen, insbesondere Methylchlorid, Dimethylsulfat, Toluolsulfonsäuremethylester und Trifluormethylsulfonsäuremethylester.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den oben genannten, auf tert. Aminogruppen oder die quaternierte Form enthaltenden Alkohole gestarteten Polyalkylenoxidpolyetheralkoholen handelt es sich vorzugsweise um reine Polyethylenoxidpolyether oder um gemischte Polyalkylenoxidpolyether, die mindestens eine Polyethersequenz aufweisen, die mindestens 2, im allgemeinen 2 bis 70, vorzugsweise 2 bis 60 besonders bevorzugt 2 bis 50, Ethylenoxideinheiten besitzt, und deren Alkylenoxideinheiten zu mindestens 60 Mol-%, vorzugsweise zu mindestens 70 Mol-%, aus Ethylenoxideinheiten bestehen.

Bevorzugte derartige Polyalkylenoxidpolyetheralkohole sind monofunktionelle, auf einem aliphatischen, tert. Aminogruppen oder deren quaternierte Form aufweisenden, bis zu 10 Kohlenstoffatome aufweisenden Alkohol gestarteten Polyalkylenoxidpolyether, die im statistischen Mittel 2 bis 60 Ethylenoxideinheiten enthalten.

Selbstverständlich können diese Polyether auch Estergruppen enthalten.

Bei den gegebenenfalls anwesenden Hilfs- und Zusatzstoffen d) handelt es sich beispielsweise um in der Polyurethanchemie an sich bekannte Katalysatoren oder Stabilisatoren für die wasserdispergierbaren Isocyanate.

Die erfindungsgemäßen Polyisocyanate P können durch Umsetzung der oben angegebenen Komponenten a) mit c) gegebenenfalls zusammen mit den Komponenten b) und/oder d) hergestellt werden. Bevorzugte Herstellungsvarianten werden im folgenden angegebenen.

Die Polyisocyanate a) können entweder separat oder im Gemisch auch in Kombination mit externen ionischen oder nichtionischen Emulgatoren eingesetzt werden. Solche Emulgatoren sind beispielsweise in Houben-Weyl, "Methoden der organischen Chemie", Thieme-Verlag, Stuttgart (1961), Bd. XIV/1, Teil 1, Seite 190 bis 208, in US-PS 3 428 592 und im EP-A 0 013 112 beschrieben. Die Emulgatoren werden in einer die Dispergierbarkeit gewährleistenden Menge eingesetzt.

Falls zunächst Polyisocyanate a) mit Polyalkylenoxidpolyetheralkoholen b) und quaternierten tert. Aminopolyethylenoxidpolyetheralkoholen c) in an sich bekannter Weise umgesetzt werden, wird bevorzugt ein NCO/OH-Äquivalentverhältnis von mindestens 2:1 (z.B. im allgemeinen von 4:1 bis ca. 1000:1) eingehalten, wodurch Polyether-modifizierte Polyisocyanate mit einer mittleren NCO-Funktionalität von 1,8 bis 4,2, vorzugsweise von 2,0 bis 4,0, einem Gehalt an aliphatisch oder cycloaliphatisch gebundenen Isocyanatgruppen von 1,0 bis 21,5 Gew.-% und einem Gehalt an innerhalb von Polyetherketten angeordneten Ethylenoxideinheiten (berechnet als C₂H₄O, Molekulargewicht = 44 g/mol) von 2 bis 35 Gew.-% erhalten werden.

Die Ausgangskomponenten werden in beliebiger Reihenfolge unter Ausschluß von Feuchtigkeit vorzugsweise ohne Lösungsmittel umgesetzt. Mit steigender Menge an Alkohol-Komponente steigt auch die Viskosität des Endproduktes, so daß in bestimmten Fällen (wenn die Viskosität z.B. über 100 Pas ansteigt) ein Lösungsmittel zugesetzt werden kann, das vorzugsweise mit Wasser mischbar ist, aber gegenüber dem Polyisocyanat inert ist. Geeignete Lösungsmittel sind:
Alkylether-acetate, Glykoldiether, Toluol, Carbonsäureester, Aceton, Methylethylketon, Tetrahydrofuran und Dimethylformamid.

Durch an sich bekannte Katalysatoren wie Dibutylzinndilaurat, Zinn-(II)-octoat oder 1,4-Diazabicyclo[2,2,2,]octan in Mengen von 10 bis 1.000 ppm, bezogen auf die Reaktionskomponenten kann die Reaktion beschleunigt werden. Die Reaktion wird bei Temperaturen bis 130°C, vorzugsweise bei 10°C bis 100°C, besonders bevorzugt bei 20°C bis 80°C, durchgeführt. Die Reaktion kann durch Titration des NCO-Gehaltes oder durch Auswertung der NCO-Bande des IR-Spektrums bei 2260 bis 2275 cm⁻¹ verfolgt werden und ist beendet, wenn der Isocyanatgehalt nicht mehr als 0,1 Gew.-% oberhalb des Wertes liegt, der dem vollständigen Umsatz entspricht. In der Regel sind Reaktionszeiten von weniger als 24 Stunden ausreichend. Bevorzugt ist lösungsmittelfreie Synthese.

Die Komponenten a) bis d) werden vorzugsweise in folgenden Mengen eingesetzt:

| | |
|---|---|
| Komponente a) | 45 bis 90 Teile, insbesondere 40 bis 75 Teile. |
| Komponente b) | 2 bis 40 Teile, insbesondere 5 bis 35 Teile. |
| Komponente c) | 0,5 bis 20 Teile, insbesondere 0,5 bis 17 Teile. |
| Komponente d) | insbesondere 1 bis 7 Teile, |

dabei ist stets die Summe aller Gewichtsteile 100.

Die erfindungsgemäßen wasserdispergierbaren Polyisocyanatgemische P sind technisch gut handhabbar und über Monate unter Ausschluß von Feuchtigkeit lagerstabil. Sie werden vorzugsweise ohne organische Lösungsmittel eingesetzt. Sie sind bei Temperaturen bis 100°C in Wasser sehr leicht zu emulgieren. Der Wirkstoffgehalt der Emulsion kann bis 70 Gew.-% betragen. Es ist aber vorteilhafter, Emulsionen mit einem Wirkstoffgehalt von 1 bis 50 Gew.-% herzustellen, die dann vor der Dosierstelle gegebenenfalls weiter verdünnt werden können. Zur Emulgierung eignen sich die in der Technik üblichen Mischaggregate (Rührer, Mischer mit Rotor-Stator-Prinzip und z.B. Hochdruckemulgiermaschinen).

Die bevorzugten Polyisocyanate P sind selbstemulgierend, d.h. sie lassen sich nach Zugabe zur Wasserphase auch ohne Einwirkung hoher Scherkräfte leicht emulgieren. In der Regel reicht ein statischer Mischer aus. Die erhaltenen Emulsionen besitzen eine bestimmte Verarbeitungszeit, die von der Struktur der erfindungsgemäß einzusetzenden Polyisocyanate, insbesondere von deren Gehalt an basischen N-Atomen abhängt. Die Verarbeitungszeit einer solchen wäßrigen Emulsion be trägt in der Regel bis zu 24 Stunden. Die Verarbeitungszeit ist als die Zeit definiert, in der das Optimum der Trocken- und Naßfestwirkung erreicht wird.

Zur Erleichterung der Einarbeitung in die wäßrige Phase kann es zweckmäßig sein, das wasserdispergierbare Polyisocyanatgemisch P in einem gegenüber Isocyanatgruppen inerten Lösungsmittel gelöst einzusetzen. Geeignete Lösungsmittel sind beispielsweise Essigsäureethylester, Ethylenglykol-diacetat, Propylenglykol-diacetat, 2-Butanon, 1-Methoxypropyl-2-acetat, Toluol oder deren Gemische. Der Anteil der Lösungsmittel in der Lösung des Polyisocyanats sollte höchstens 80 Gew.-% vorzugsweise höchstens 50 Gew.-% betragen. Besonders bevorzugt ist jedoch die erfindungsgemäße Verwendung lösungsmittelfreier, wasserdispergierbarer Polyisocyanaten.

Die Erfindung betrifft weiterhin ein Verfahren zur Veredelung cellulosehaltiger, gegebenenfalls holzhaltiger Materialien, dadurch gekennzeichnet, daß diese Materialien mit einem erfindungsgemäßen wasserdispergierbaren Polyisocyanat P behandelt werden.

Die Erfindung betrifft weiterhin cellulosehaltige, gegebenenfalls holzhaltige Materialien, die durch Veredelung mit einem erfindungsgemäßen wasserdispergierbaren Polyisocyanat P erhalten und gegebenenfalls weiterverarbeitet wurden.

Die für das erfindungsgemäße Verfahren geeigneten cellulosehaltigen Materialien sind zum Beispiel Papier oder papierähnliche Materialien wie Pappe und Karton. Die für die Naßfest- und Trockenfestausrüstung bevorzugten Polyisocyanatgemische besitzen eine NCO-Funktionalität größer 2.

Zur Trocken- und Naßfestausrüstung können die wasserdispergierbaren Polyisocyanate P in der Masse eingesetzt werden, sie werden dann vorzugsweise der cellulosehaltigen Dispersion der Faserrohstoffe direkt zugesetzt. Dazu emulgiert man das Polyisocyanat P bei 20 bis 80°C in Wasser und gibt die dabei erhaltene Emulsion zu einer Suspension des Faserrohstoffs oder dispergiert sie direkt in der Suspension der Faserstoffe. Aus dieser Suspension bildet sich durch Entwässerung das Papier, das anschließend getrocknet wird. Zur Emulgierung des Polyisocyanates P ist es zweckmäßig, die 1- bis 4-fache Menge an Wasser vorzugeben. Auch höhere Wassermengen sind möglich. Zur Behandlung der Oberfläche wird ein fertiges Rohpapier mit einer Emulsion des Polyisocyanats P in Wasser behandelt und anschließend getrocknet. Der Einsatz in der Leimpresse ist möglich. Dabei wird das in Wasser emulgierte Polyisocyanat P auf die fertige Papierbahn übertragen.

Es ist besonders bevorzugt, die wäßrige Emulsion der Polyisocyanate P innerhalb von 60 Minuten, vorzugsweise innerhalb von 15 Minuten zum Faserstoff zu dosieren. Um die optimale Naßfestigkeit unter Praxisbedingungen zu erzielen, ist eine Dosierung des Polyisocyanats z.B. kurz vor dem Stoffauflauf der Papiermaschine besonders empfehlenswert. Zur Prüfung wird man im allgemeinen im Labor Papierblätter mit einem Flächengewicht von 50 bis 100 g/m² bilden.

Erfindungsgemäß können die Produkte im pH-Bereich von 4 bis 10, vorzugsweise von 5,5 bis 9 in der Masse zum Feststoff dosiert werden. Besonders bevorzugt ist die Anwendung im neutralen pH-Bereich (pH 6 bis 7,5). Die vom pH-Wert unabhängigen kationischen Ladung führt dazu, daß das Aufziehverhalten auch im alkalischen verbessert wird, ganz im Gegensatz zu den nur tert. Aminogruppen aufweisenden wasserdispergierbaren Polyisocyanaten.

Die Einsatzmengen an erfindungsgemäß einzusetzenden wasserdispergierbaren Polyisocyanat P richten sich nach dem angestrebten Effekt. In der Regel sind Einsatzmengen von 0,001 bis 50 Gew.-%, vorzugsweise 0,1 bis 10 Gew.-%, besonders bevorzugt 0,1 bis 2,0 Gew.-%, Wirkstoff, bezogen auf trockenen Faserrohstoff, ausreichend. Die Dosierung an Wirksubstanz, bezogen auf Faserrohstoff, entspricht der von bekannten Naßfestmitteln des Polyamidamin-Epichlorhydrin-Typs.

Die erfindungsgemäß einzusetzenden Polyisocyanate P ergeben gebrauchsfertige Papiere mit guter Naßfestigkeit ab Maschine. Durch Lagerung des fertigen Papiers und/oder eine Nachkondensation kann eine Verstärkung der Naßfestwirkung erreicht werden. Auch die Trockenfestigkeit ist gegenüber konventionellen Trockenfestmitteln verbessert.

Das erfindungsgemäße Verfahren zur Veredelung wird unter den in der Papierindustrie üblichen Verarbeitungstemperaturen durchgeführt. Die Verarbeitungsdauer ist dabei von der Temperatur abhängig. Im Temperaturbereich von 20 bis 25°C ist die Verarbeitungsdauer relativ lang. Die Naßfestwirkung erreicht nach 6-stündiger Lagerung der wäßrigen Emulsion noch ca. 70 % des Wertes bei sofortiger Anwendung der Emulsion. Bei höherer Temperatur, z.B. bei 50°C, ist eine Verarbeitung innerhalb von 6 Stunden zu empfehlen. Die maximale Naßfestwirkung ist dagegen überraschenderweise kaum von der Kontaktzeit mit der Cellulose abhängig. Papiere, die sofort und nach einer Kontaktzeit von 2 Stunden nach Zusatz des wasserdispergierbaren Polyisocyanates zum Papierfaserstoff gebildet wurden, zeigen jeweils die gleiche Naßfestigkeit. Durch geeignete Wahl der Ausgangskomponenten kann die Festigkeit des Papiers in der gewünschten Weise eingestellt werden. Das erfindungsgemäße Verfahren eignet sich nicht nur zur Herstellung von trockenfesten und wasserfesten Papieren, sondern auch zur Herstellung von öl-und benzinständigen Papieren.

Die wasserdispergierbaren Polyisocyanate P sind in Kombination mit anderen kationischen Hilfsmitteln, wie Retentionsmitteln, Fixierhilfsmittel, Trockenhilfsmittel und Naßfestmitteln, einsetzbar. Insbesondere durch Zusatz von handelsüblichen Retentionsmitteln vom Typ der kationischen Polykondensate und Polymerisate, z.B. der Polyamide, der Polyethylenimine, der Polyamidamine und der Polyacrylamide sowie der Dual-Systeme, bestehend aus kationischen oder kationischen und anionischen und gegebenenfalls partikulären Komponenten wie Kieselsolen etc. kann die Fixierung von Füllstoffen noch verstärkt werden.

Dies ist besonders dann von Interesse, wenn eine Anwendung im Laminatpapier-Bereich gedacht ist. Bevorzugte Retentionsmittel im Sinne der Erfindung sind kationische Polykondensate aus Polyaminen, vorzugsweise mit Dichlorethan. Es sei jedoch hervorgehoben, daß der gewünschte Naßfesteffekt auch ohne Zusatz besonderer Fixierhilfsmitteln zu erzielen ist. Die Festigkeit des Papiers kann insbesondere durch Kombination mit Polysacchariden wie Hydroxyethylcellulose, Carboxymethylcellulose, Stärke, Galactomannanen oder deren kationischen Derivaten erhöht werden.

Selbstverständlich können die erfindungsgemäß einzusetzenden Polyisocyanate P gegebenenfalls mit dem oben genannten kationischen Hilfsmitteln gemeinsam, d.h. gleichzeitig oder nacheinander, eingesetzt werden. Da viele der Hilfsmittel jedoch organisch gebundenes Halogen enthalten, ist eine Kombination mit AOX-freien und/oder AOX-armen Hilfsmitteln besonders bevorzugt, da die chlorfreie Papierherstellung vorrangiges Ziel ist.

Alle mit Hilfe der erfindungsgemäßen wasserdispergierbaren Polyisocyanate P unter Mitverwendung der in der DE-A 4 446 334 beschrieben Ester- und/oder Amidgruppen enthaltenden Isocyanate hergestellten cellulosehaltigen, gegebenenfalls holzhaltigen Materialien wie Papier, Pappe oder Karton sind wiederaufschließbar.

Dieses Wiederaufschließen mit dem Ziel der Wiederverwendung der Faserrohstoffe ist auf verschiedene Weise möglich:
a) Durch Behandlung mit Alkalien oder Säuren, bevorzugt mit Alkalien bei leicht erhöhter Temperatur, 35 bis 120°C, bevorzugt 40 bis 110°C, gegebenenfalls unter Mitverwendung von Oxidationsmitteln wie H₂O₂ oder K₂S₂O₈.
b) Durch Behandlung mit Ozon.
c) Durch Behandlung mit estergruppenspaltenden Enzymen.
d) Durch Behandlung mit estergruppenspaltenden Mikroorganismen.

Diese an sich bekannten Methoden führen bei einem naßfesten cellulosehaltigen Material zum Verlust der Naßfestigkeit und zur Möglichkeit, durch Zerfaserung der cellulosehaltigen Materialien die Faserrohstoffe zurückzugewinnen.

Die Reaktionen a) bis d) laufen normalerweise sehr glatt ab, jedoch ist eine generelle Angabe von Reaktionszeiten nicht möglich, da diese im starken Maße abhängig sind vom Grade der Naßverfestigung und beispielsweise vom Flächengewicht der wiederaufzuschließenden cellulosehaltigen Materialien. Des weiteren ist es möglich, mit Hilfe der zuletzt beschriebenen wasserdispergierbaren Polyisocyanate sei es in Substanz oder in wäßriger Suspension, chemisch oder biologisch abbaubare Beschichtungsmittel, Klebstoffe, Bindemittel oder Kunststoffe herzustellen.

Die Erfindung betrifft weiterhin quaternierte tertiäre Aminopolyethylenoxidpolyetheralkohole c) der oben angegebenen Struktur I.

### Beispiele

### Vergleichssubstanz 1

Ein handelsübliches Naßfestmittel auf Basis einer wäßrigen Lösung eines Polyamidamin-Halogenhydrin-Umsetzungsproduktes.

### Vergleichssubstanz 2 (Polyisocyanat des Standes der Technik It. DE-A 4226110)

82 g eines durch Trimerisierung eines Teils der Isocyanatgruppen von 1,6-Diisocyanatohexan hergestellten, Isocyanuratgruppen aufweisenden Polyisocyanats, das im wesentlichen als Tris(6-isocyanatohexyl)-isocyanurat und dessen höheren Homologen besteht und einen NCO-Gehalt von 21,4 %, einen Gehalt an monomerem 1,6-Diisocyanatohexan < 0,3 % und eine Viskosität von 3.000 mPas (23°C) aufweist, wird mit 17 g eines auf 2-(2-Methoxyethoxy)ethanol gestarteten Polyethers auf Basis von Ethylenoxid mit einem Zahlenmittel des Molgewichts von 350 g/mol und einer Hydroxylzahl von 160 mg KOH/g und 1 g Dimethylaminoethanol umgesetzt.

| | |
|---|---|
| NCO-Gehalt | 15,20 % |
| Viskosität (23°C) | 3500 mPas |

Das wasserdispergierbare Isocyanat wird mit Propylenglykoldiacetat auf 80 % Feststoffgehalt verdünnt.

### Erfindungsgemäße Zusammensetzungen

Die erfindungsgemäßen wasserdispergierbaren Polyisocyanate P werden durch Reaktion folgender Komponenten hergestellt:

### Komponente a):

Ein durch Trimerisierung eines Teils der Isocyanatgruppen von 1,6-Diisocyanatohexan hergestellten, Isocyanuratgruppen aufweisenden Polyisocyanates, das im wesentlichen aus Tri(6-isocyanatohexyl)isocyanurat und dessen höheren Homologen besteht und einen NCO-Gehalt von 21,4%, einen Gehalt an monomeren 1,6-Diisocyanatohexan < 0,3% und eine Viskosität von 3000 mPas (23°C) aufweist.

### Komponente b):

200 g raffiniertes Ricinusöl (nOH = 0,579 mol) werden zusammen mit 389 g Hexamethylendiisocyanat (nOH = 4,632 mol) bei 80°C gerührt, bis der Isocyanatgehalt auf 28,3 % abgesunken ist. Das überschüssige Isocyanat wird dann mit Hilfe eines Dünnschichtverdampfers entfent; der Isocyanatgehalt beträgt 7,9 % (theoretischer Wert 8,18%), die Viskosität ist 4533 mPas.

### Komponente c):

Ein auf 2-(2-Methoxy)-ethoxyethanol gestarteter Polyether auf Basis von Ethylenoxid mit einem Zahlenmittel des Molgewichtes von 350 g/mol und einer OH-Zahl von 160 mg KOH/g.

### Komponente d):

Ein auf Morpholinoethanol gestarteter Polyether auf Basis von Ethylenoxid mit einem Zahlenmittel des Molgewichtes von 428 g/mol und einer OH-Zahl von 131 mg KOH/g. Dieser Polyether wird mit Toluolsulfonsäuremethylester umgesetzt im stöchiometrischem Verhältnis 1:1. Seine OH-Zahl beträgt dann 89 mg KOH/g.

Wie bei Vergleichssubstanz 1 beschrieben wurden die Komponenten a) und b) in den in der folgenden Tabelle 1 beschriebenen Mengenverhältnisse vorgelegt und durch Reaktion bei 60°C mit den Komponenten c) und d) zur Reaktion gebracht.

**Tabelle 1**

| Isocyanat * | a) [Gew.- Teile] | b) [Gew.- Teile] | c) [Gew.- Teile] | d) [Gew.- Teile] |
|---|---|---|---|---|
| 1 (Vergleich) | 30,2 | 45,3 | 18,1 | 6,4 |
| 2 (Vergleich) | 37,8 | 37,8 | 18,1 | 6,4 |
| 3 (Erfindung) | 22,6 | 52,9 | 18,1 | 6,4 |
| 4 (Erfindung) | ---- | 75,5 | 18,1 | 6,4 |
| 5 (Erfindung) | 15,1 | 60,4 | 18,1 | 6,4 |
| 6 (Erfindung) | 11,3 | 64,2 | 18,1 | 6,4 |

| | | | | |
|---|---|---|---|---|
| * alle wasserdispergierbaren Isocyante enthielten noch 0,05 Teile Dibutylphosphorsäure. | | | | |

### Herstellung von Papier und Prüfung der Naßfestigkeit

Eine Mischung aus 80 % gebleichtem Kiefemsulfat-Zellstoff und 20 % gebleichtem Birkensulfat-Zellstoff wird bei einer Stoffdichte von 2,5 % im Holländer auf einen Mahlgrad von 38° SR gemahlen. Sodann werden jeweils 100 g der erhaltenen Zellstoffsuspension in Bechergläsern mit Wasser auf 1.000 ml Volumen verdünnt.

0,5 Gew.-% und 1,0 Gew.-% bezogen auf den Zellstoff, sowohl von den Vergleichssubstanzen als auch von den hergestellten wasserdispergierbaren Isocyanaten, werden nach vorheriger Dispergierung in Wasser (Dispersion mit 20 Gew.-% Polyisocyanat)zu den Zellstoff-Dispersionen gegeben und diese Dispersionen nach Zugabe noch 3 Minuten gerührt.

Danach werden mit den Inhalten der Bechergläser auf einem Blattbildner (Rapid-Köthen-Gerät) Papierblätter mit einem Flächengewicht von ca. 80 g/m² gebildet. Die Papierblätter werden bei 85°C 8 Minuten im Vakuum bei 20 mm Hg (26,7 mbar) getrocknet und noch 10 Minuten bei 110°C nacherhitzt. Aus jedem Papierblatt werden nach Klimafixierung 5 Prüfstreifen von 1,5 cm Breite ausgeschnitten und 5 Minuten in destilliertes Wasser eingetaucht. Sodann werden die nassen Streifen auf einer Zugmaschine sofort auf ihre Naßbruchlast geprüft. Die Prüfergebnisse sind in der folgenden Tabelle 2 zusammengefaßt.

Hierbei sind die Ergebnisse bei der Naßbruchlast umso besser, je größer der Wert ist, während die Werte der Naßbruchlast nach NaOH-Behandlung umso besser sind, je kleiner der Wert ist. Die letzte Zeile der Tabelle (% restliche Naßbruchlast) ergibt sich aus den beiden vorangegangenen Zeilen, der Wert ist umso besser, je kleiner er ist.

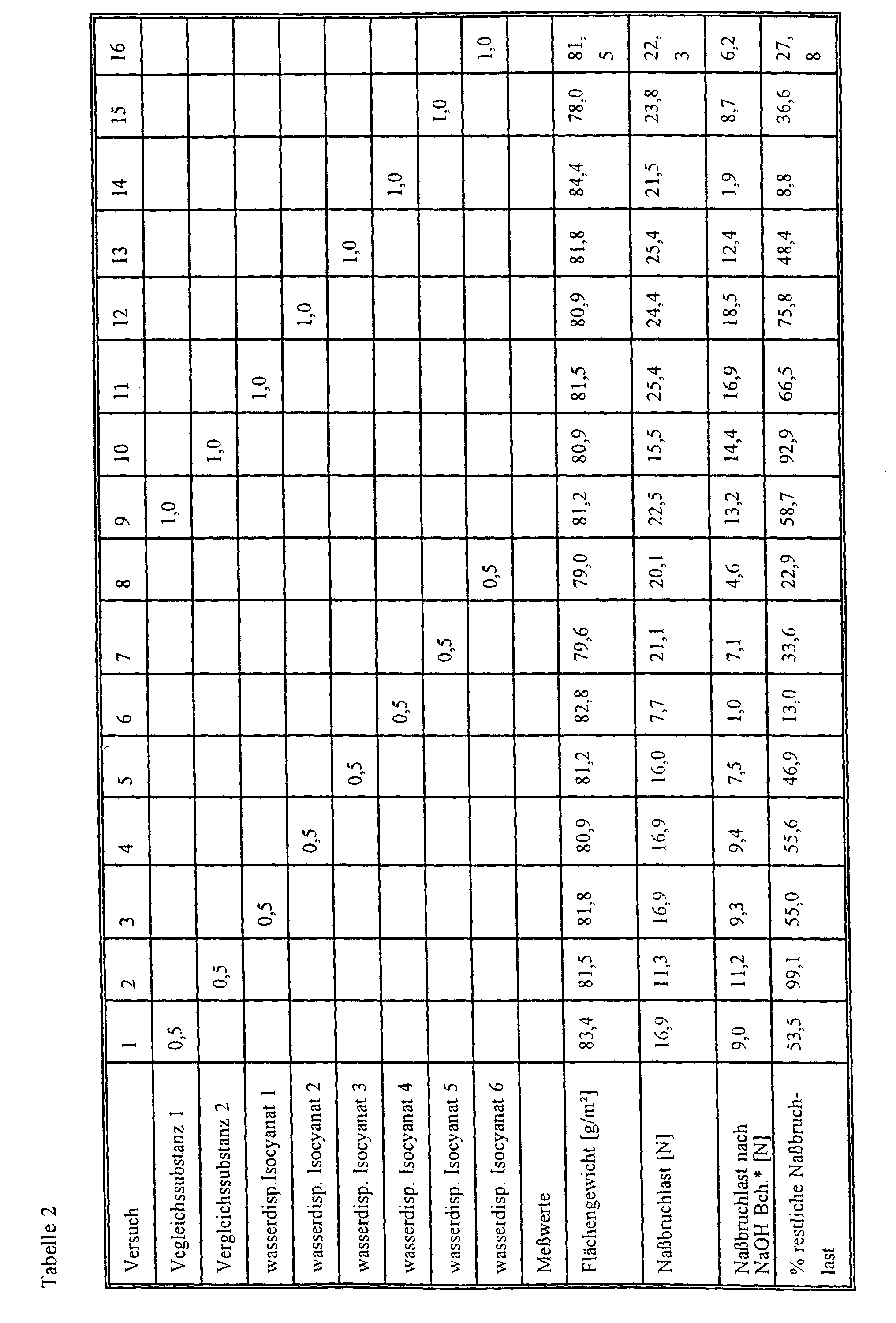

## Patentansprüche

1. Wasserdispergierbares Polyisocyanat P, erhältlich durch Umsetzung folgender Ausgangskomponenten:
a) wenigstens eines Polyisocyanates a),
b) wenigstens eines, gegebenenfalls Estergruppe enthaltenden, Polyalkylenoxidpolyetheralkohols b) und
c) wenigstens eines quaternierten tertiären Aminopolyethylenoxidpolyetheralkohols,
d) gegebenenfalls weitere Hilfs- und Zusatzstoffe, wobei c) ungleich b) ist.

2. Wasserdispergierbares Polyisocyanat P gemäß Anspruch 1, **dadurch gekennzeichnet, daß** als Polyisocyanat a) ein modifiziertes Polyisocyanat verwendet wird.

3. Wasserdispergierbares Polyisocyanat P gemäß wenigstens einem der vorhergehenden Ansprüche, **dadurch gekennzeichnet, daß** als Polyisocyanat a) eine Verbindung der Formel (II) 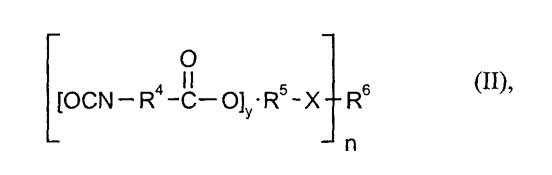 in der bedeuten:
R⁴ einen aliphatischen Kohlenwasserstoffrest mit 2 bis 18 Kohlenstoffatomen; einen cycloaliphatischen Kohlenwasserstoffrest mit 4 bis 15 Kohlenstoffatomen; einen aromatischen Kohlenwasserstoffrest mit 6 bis 15 Kohlenstoffatomen oder einen araliphatischen Kohlenwasserstoffrest mit 8 bis 15 Kohlenstoffatomen,
R⁵ einen gegebenenfalls Doppelbindungen aufweisenden aliphatischen Kohlenwasserstoffrest mit 10 bis 35 Kohlenstoffatomen,
R⁶ einen mindestens zweiwertigen Kohlenwasserstoffrest, der auch gegebenenfalls unter Einbeziehung des Estersauerstoffes bzw. Amidstickstoffs aus X heterocyclisch sein kann,
X 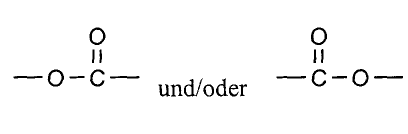 und/oder 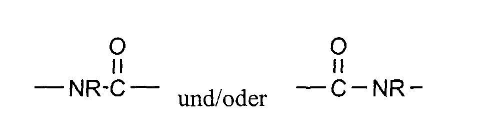 mit R = H oder C₁-C₄-Alkyl oder Bestandteil einer ringförmigen Struktur, n eine Zahl ≥ 2 und y eine Zahl ≥ 1,
entweder allein oder im Gemisch mit nicht Ester- und/oder Amidgruppen enthaltenden Isocyanaten verwendet wird.

4. Wasserdispergierbares Polyisocyanat P gemäß wenigstens einem der vorangegangenen Ansprüche, **dadurch gekennzeichnet, daß** als Polyisocyanat
a) folgende Derivate von Diisocyanaten verwendet werden: Isocyanurate, Allophanate, Biurete, Oxadiazine sowie Uretdione.

5. Wasserdispergierbares Polyisocyanat P gemäß wenigstens einem der vorhergehenden Ansprüche, **dadurch gekennzeichnet, daß** als Polyalkylenoxidpolyetheralkohol b) ein- oder mehrwertige, im statistischen Mittel 5 bis 70, vorzugsweise 6 bis 60 Alkylenoxideinheiten pro Molekül enthaltende Polyalkylenoxidpolyetheralkohole, wie sie in an sich bekannter Weise durch Alkoxylierung geeigneter Startermoleküle zugänglich sind, verwendet werden.

6. Wasserdispergierbares Polyisocyanat P gemäß Anspruch 1, **dadurch gekennzeichnet, daß** als Aminopolyalkylenoxidpolyetheralkohol c) eine Verbindung der Struktur I 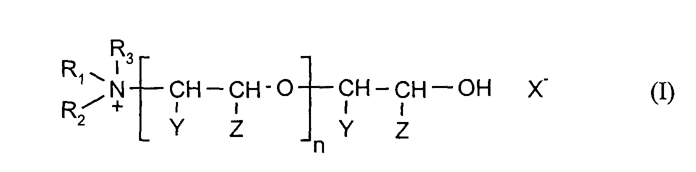 worin bedeuten:
n ganze Zahl von 2 bis 60,
R₁, R₂ gleich oder verschieden, Alkylrest mit 2 bis 7 C-Atomen oder zusammen, gegebenenfalls unter Einbeziehung von R₃, den Rest eines heterocyclischen Ringes, insbesondere Morpholin,
R3 Alkylrest mit 1 bis 7 C-Atomen,
X⁻ in der Isocyanatchemie übliches Anion, insbesondere 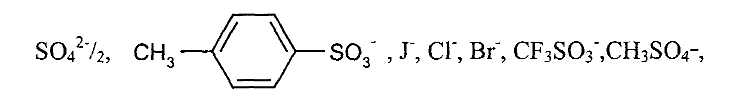
Y,Z Wasserstoff oder Methyl mit der Maßgabe, daß stets mindestens einer von beiden Wasserstoff darstellt, wobei die wiederkehrenden Einheiten ⁅CHY―CHZ-O⁆ jeweils gleich oder verschieden voneinander sein können,
verwendet wird.

7. Verfahren zur Herstellung wasserdispergierbarer Polyisocyanat P, **dadurch gekennzeichnet, daß** in beliebiger Reihenfolge miteinander umgesetzt werden:
a) wenigstens ein Polyisocyanat a),
b) wenigstens ein gegebenenfalls Estergruppen enthaltender Polyethylenoxidpolyetheralkohol b),
c) wenigstens ein quatemierter tertiärer Aminopolyethylenoxidpolyetheralkohol und
d) gegebenenfalls weitere Hilfs- und Zusatzstoffe, wobei c) ungleich b) ist.

8. Verfahren zur Veredelung cellulosehaltiger, gegebenenfalls holzhaltiger Materialien, **dadurch gekennzeichnet, daß** diese Materialien mit einem wasserdispergierbaren Polyisocyanat P gemäß Anspruch 1 behandelt werden.

9. Cellulosehaltige, gegebenenfalls holzhaltiges Material, erhältlich durch Behandlung cellulosehaltiger, gegebenenfalls holzhaltiger Materialien mit einem wasserdispergierbaren Polyisocyanat P gemäß Anspruch 1.

10. Material gemäß Anspruch 9, **dadurch gekennzeichnet, daß** es ein Papier ist.

## Claims

1. Water-dispersible polyisocyanate P obtainable by reaction of the following starting components:
a) at least one polyisocyanate a),
b) at least one polyalkylene oxide polyether alcohol b) optionally containing ester groups and
c) at least one quaternized tertiary aminopolyethylene oxide polyether alcohol,
d) optionally further auxiliaries and additives, where c) is not equal to b).

2. Water-dispersible polyisocyanate P according to Claim 1, **characterized in that** a modified polyisocyanate is used as polyisocyanate a).

3. Water-dispersible polyisocyanate P according to at least one of the preceding claims, **characterized in that** the polyisocyanate a) used is a compound of the formula (II) 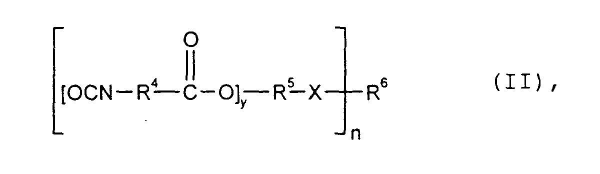 in which:
R⁴ denotes an aliphatic hydrocarbon radical having 2 to 18 carbon atoms; a cycloaliphatic hydrocarbon radical having 4 to 15 carbon atoms; an aromatic hydrocarbon radical having 6 to 15 carbon atoms or an araliphatic hydrocarbon radical having 8 to 15 carbon atoms,
R⁵ denotes an aliphatic hydrocarbon radical which optionally contains double bonds and has 10 to 35 carbon atoms,
R⁶ denotes an at least divalent hydrocarbon radical, which can also optionally be heterocyclic, including the ester oxygen or amide nitrogen from X,
X denotes 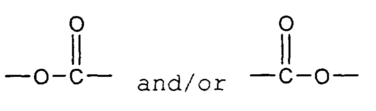 and/or 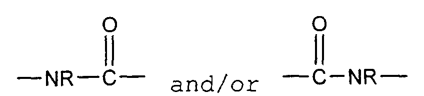 where R = H or C₁-C₄-alkyl or a constituent of a cyclic structure, n denotes a number ≥ 2, and y denotes a number ≥ 1,
either by themselves or as a mixture with isocyanates which do not contain ester and/or amide groups.

4. Water-dispersible polyisocyanate P according to at least one of the preceding claims, **characterized in that** the following derivatives of diisocyanates are used as polyisocyanate a) isocyanurates, allophanates, biurets, oxadiazines and uretdiones.

5. Water-dispersible polyisocyanate P according to at least one of the preceding claims, **characterized in that** mono- or polyhydric polyalkylene oxide polyether alcohols containing a random average of 5 to 70, preferably 6 to 60 alkylene oxide units per molecule, such as are accessible in a manner known per se by alkoxylation of suitable starter molecules, are used as polyalkylene oxide polyether alcohol b).

6. Water-dispersible polyisocyanate P according to Claim 1, **characterized in that** the aminopolyalkylene oxide polyether alcohol c) used is a compound of the structure I 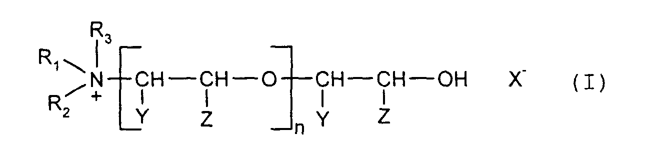 wherein:
n denotes an integer from 2 to 60,
R₁ and R₂ are identical or different and denote an alkyl radical having 2 to 7 C atoms, or together, optionally including R₃, denote the radical of a heterocyclic ring, in particular morpholine,
R3 denotes an alkyl radical having 1 to 7 C atoms,
X⁻ denotes an anion customary in isocyanate chemistry, in particular SO₄²⁻/₂, 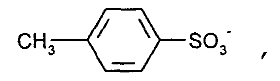 I⁻, Cl⁻, Br⁻, CF₃SO₃⁻, CH₃SO₄⁻,
Y and Z denote hydrogen or methyl, with the proviso that always at least one of the two represents hydrogen, it being possible for recurring units ⁅CHY―CHZ-O⁆ in each case to be identical or different from one another.

7. Process for the preparation of a water-dispersible polyisocyanate P, **characterized in that**:
a) at least one polyisocyanate a),
b) at least one polyethylene oxide polyether alcohol b) optionally containing ester groups,
c) at least one quaternized tertiary aminopolyethylene oxide polyether alcohol and
d) optionally further auxiliaries and additives, where c) is not equal to b),
are reacted with one another in any desired sequence.

8. Process for the refinement of cellulosic, optionally wood-containing materials, **characterized in that** these materials are treated with a water-dispersible polyisocyanate P according to Claim 1.

9. Cellulosic, optionally wood-containing material obtainable by treatment of cellulosic, optionally wood-containing materials with a water-dispersible polyisocyanate P according to Claim 1.

10. Material according to Claim 9, **characterized in that** it is a paper.

## Revendications

1. Polyisocyanate dispersable à l'eau P, obtenu par réaction des composants suivants :
a) au moins un polyisocyanate a),
b) au moins un poly(oxyde d'alkylène)polyéther-alcool contenant le cas échéant des groupes ester b) et
c) au moins un tert-aminopoly(oxyde d'éthylène)polyéther-alcool quaternisé,
d) le cas échéant d'autres produits auxiliaires et additifs, sous réserve que c) est différent de b).

2. Polyisocyanate dispersable à l'eau P selon la revendication 1, **caractérisé en ce que** le polyisocyanate a) qui a été utilisé est un polyisocyanate modifié.

3. Polyisocyanate dispersable à l'eau P selon au moins une des revendications qui précèdent, **caractérisé en ce que** l'on a utilisé en tant que polyisocyanate a) un composé de formule (II) 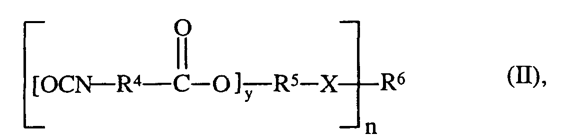 dans laquelle
R⁴ représente un radical hydrocarboné aliphatique en C₂-C₁₈, un radical hydrocarboné cycloaliphatique en C₄-C₁₅, un radical hydrocarboné aromatique en C₆-C₁₅ ou un radical hydrocarboné araliphatique en C₈-C₁₅,
R⁵ représente un radical hydrocarboné aliphatique en C₁₀-C₃₅ qui contient le cas échéant des doubles liaisons,
R⁶ représente un radical hydrocarboné au moins divalent qui peut le cas échéant être hétérocyclique avec inclusion de l'oxygène d'ester ou de l'azote d'amide de X,
x représente 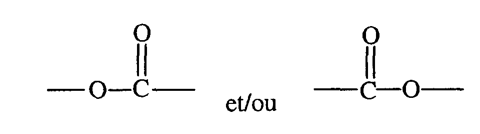 et/ou 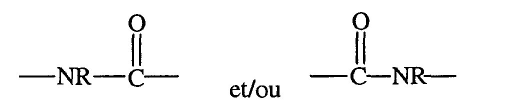
dans lesquels R représente H ou un groupe alkyle en C₁-C₄ ou est constituant d'une structure cyclique, n est un nombre supérieur ou égal à 2 et y un nombre supérieur ou égal à 1,
seul ou en mélange avec des isocyanates qui ne contiennent pas de groupes ester et/ou amide.

4. Polyisocyanate dispersable à l'eau P selon au moins l'une des revendications qui précèdent, **caractérisé en ce que** l'on a utilisé pour le polyisocyanate a) les dérivés suivants de diisocyanates: isocyanurates, allophanates, biurets, oxadiazines et uretdiones.

5. Polyisocyanate dispersable à l'eau P selon au moins l'une des revendications qui précèdent, **caractérisé en ce que** l'on a utilisé pour le poly(oxyde d'alkylène)polyéther-alcool b) des poly(oxydes d'alkylène)polyéther-alcools mono- ou poly-valents, contenant en moyenne statistique 5 à 70, de préférence 6 à 60 motifs d'oxyde d'alkylène par molécule, tels qu'on peut les obtenir de manière connue en soi par alcoxylation de molécules de départ appropriées.

6. Polyisocyanate dispersable à l'eau P selon la revendication 1, **caractérisé en ce que** l'on a utilisé en tant qu'aminopoly(oxyde d'alkylène)polyéther-alcool c) un composé possédant la structure I 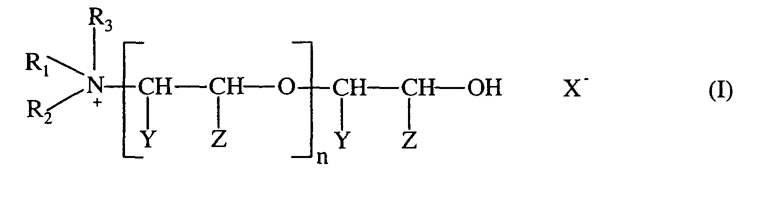 dans laquelle
n est un nombre entier allant de 2 à 60,
R₁ et R₂, ayant des significations identiques ou différentes, représentent chacun un groupe alkyle en C₂-C₇ ou forment ensemble, le cas échéant avec inclusion de R₃, le radical d'un hétérocycle, en particulier d'un cycle morpholine,
R3 représente un groupe alkyle en C₁-C₇,
X⁻ représente un anion usuel dans la chimie des isocyanates, plus spécialement SO₄^{-2/2}, 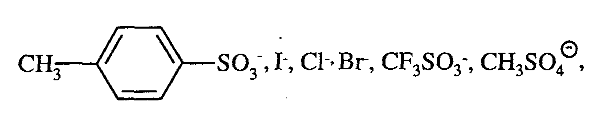
Y, Z, représentent l'hydrogène ou des groupes méthyle sous réserve que l'un des deux au moins représente l'hydrogène, les motifs répétés ⁅CHY―CHZ-O⁆ pouvant dans tous les cas être identiques ou différents.

7. Procédé de préparation de polyisocyanates P dispersables à l'eau, **caractérisé en ce que** l'on fait réagir entre eux dans un ordre quelconque :
a) au moins un polyisocyanate a),
b) au moins un poly(oxyde d'éthylène)polyéther-alcool b) contenant le cas échéant des groupes ester b)
c) au moins un tert-aminopoly(oxyde d'éthylène)polyéther-alcool quaternisé, et
d) le cas échéant d'autres produits auxiliaires et additifs, sous réserve que c) est différent de b).

8. Procédé pour l'ennoblissement de matières cellulosiques contenant le cas échéant du bois, **caractérisé en ce que** l'on traite ces matières par un polyisocyanate dispersable à l'eau P selon la revendication 1.

9. Matière cellulosique contenant le cas échéant du bois, obtenue en traitant des matières cellulosiques contenant le cas échéant du bois par un polyisocyanate dispersable à l'eau P selon la revendication 1.

10. Matière selon la revendication 9, **caractérisée en ce qu'**il s'agit d'un papier.
